(19) Europäisches Patentamt / European Patent Office / Office européen des brevets

(11) **EP 2 999 156 B1**

(12) **EUROPEAN PATENT SPECIFICATION**

(45) Date of publication and mention
of the grant of the patent:
**31.07.2019 Bulletin 2019/31**

(21) Application number: **13884745.4**

(22) Date of filing: **15.05.2013**

(51) Int Cl.:
***G09C 1/00*** (2006.01)　　　***H04L 9/08*** (2006.01)
***H04L 9/32*** (2006.01)

(86) International application number:
**PCT/JP2013/063560**

(87) International publication number:
**WO 2014/184899 (20.11.2014 Gazette 2014/47)**

(54) **DEVICE AUTHENTICITY DETERMINATION SYSTEM AND DEVICE AUTHENTICITY DETERMINATION METHOD**

VORRICHTUNGSAUTHENTIZITÄTSBESTIMMUNGSSYSTEM UND
VORRICHTUNGSAUTHENTIZITÄTSBESTIMMUNGSVERFAHREN

SYSTÈME DE DÉTERMINATION DE L'AUTHENTICITÉ D'UN DISPOSITIF ET PROCÉDÉ DE
DÉTERMINATION DE L'AUTHENTICITÉ D'UN DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.03.2016 Bulletin 2016/12**

(73) Proprietor: **Mitsubishi Electric Corporation
Tokyo 100-8310 (JP)**

(72) Inventor: **SUZUKI, Daisuke
Tokyo 100-8310 (JP)**

(74) Representative: **Pfenning, Meinig & Partner mbB
Patent- und Rechtsanwälte
Theresienhöhe 11a
80339 München (DE)**

(56) References cited:
JP-A- 2006 040 190　　JP-A- 2006 102 364
JP-A- 2009 508 430　　JP-A- 2011 198 317

- TUYL P ET AL: "Strong authentication with physical unclonable functions", 1 January 2007 (2007-01-01), SECURITY, PRIVACY, AND TRUST IN MODERN DATA MANAGEMENT : WITH 13 TABLES, SPRINGER, BERLIN, DE, PAGE(S) 133 - 148, XP009139190, ISBN: 978-3-540-69860-9 * page 135 - page 136 *
- JORGE GUAJARDO ET AL: "Anti-counterfeiting, key distribution, and key storage in an ambient world via physical unclonable functions", INFORMATION SYSTEMS FRONTIERS ; A JOURNAL OF RESEARCH AND INNOVATION, KLUWER ACADEMIC PUBLISHERS, BO, vol. 11, no. 1, 23 October 2008 (2008-10-23), pages 19-41, XP019677732, ISSN: 1572-9419
- PIM TUYLS ET AL: "RFID-Tags for Anti-counterfeiting", 1 January 2005 (2005-01-01), TOPICS IN CRYPTOLOGY - CT-RSA 2006 : THE CRYPTOGRAPHERS' TRACK AT THE RSA CONFERENCE 2006, SAN JOSE, CA, USA, FEBRUARY 13-17, 2006 ; PROCEEDINGS; [LECTURE NOTES IN COMPUTER SCIENCE], SPRINGER, BERLIN, DE, PAGE(S) 115 - 131, XP019026798, ISBN: 978-3-540-31033-4 * paragraph [0005] *

**Description**

Technical Field

The present invention relates to a device authenticity determination system and device authenticity determination method for detecting a counterfeit product or tampering of a built-in device having a semiconductor chip mounted thereon.

Background Art

In recent years, as more built-in devices represented by mobile phones are becoming subjected to networking, the built-in device is increasingly demanded to perform processing involving information security in order to maintain concealment of data handled by the built-in device and integrity thereof, and authenticate the built-in device itself.

Such processing involving the information security is implemented by an encryption algorithm or an authentication algorithm. Now, consideration is given to a system in which two LSIs perform authentication to confirm that one device to which the other device is connected is valid. As a specific example thereof, there is a conceivable case where an LSI mounted on a mobile phone main body authenticates an LSI mounted on a battery thereof to confirm that the battery is allowed to be connected thereto. That is, the main body to be used as the master verifies the validity and genuineness of the peripheral devices that are to be slaves.

In general, such a function is implemented by an authentication protocol using encryption. An example of two authentication protocols that differ in encryption scheme is described below.

Example 1: Authentication Protocol Based on Common Key Cryptosystem

(1) A secret key MK is stored in advance in an LSI mounted on a slave A. Further, the secret key MK of the slave A is also registered in a master B.
(2) At the time of authentication, the master B generates a random number r, encrypts the random number r with the use of the secret key MK to generate c, and transmits the generated c to the slave A. The generated c in this case is represented by $c=E_{MK}(r)$.
(3) The slave A decrypts c with the use of MK to obtain r', and sends r' to the master B. The generated r' in this case is represented by $r'=D_{MK}(c)$.
(4) When r=r', the master B issues a notification that the slave A is a genuine product. When $r \neq r'$, the master B issues a notification that the slave A may be a counterfeit product.

It is a point of this protocol that the authentication can be successfully passed as long as the master and the slave each have the same secret key MK.

Example 2: Authentication Protocol Based on Public Key Cryptosystem

(1) A secret key SK is stored in advance in an LSI mounted on a slave A. Further, a public key PK corresponding to the secret key MK of the slave A is also registered in a master B.
(2) At the time of authentication, the master B generates a random number r, encrypts the random number r with the use of the public key PK to generate c, and transmits the generated c to the slave A. The generated c in this case is represented by $c=E_{PK}(r)$.
(3) The slave A decrypts c with the use of SK to obtain r', and sends r' to the master B. The generated r' in this case is represented by $r'=D_{SK}(c)$.
(4) When r=r', the master B issues a notification that the slave A is a genuine product. When $r \neq r'$, the master B issues a notification that the slave A may be a counterfeit product.

It is a point of this protocol that the authentication can be successfully passed as long as the slave has the secret key SK corresponding to the public key PK registered in the master. It is a major premise in executing those protocols that the slave A "securely" holds the secret key MK or SK. The word "securely" means that it is difficult for a person who is not legitimately allowed to access the device to read or tamper with the secret key.

As a method of securely holding the secret information, there is a technology called a physical unclonable function (PUF). One of major features of the PUF resides in that the secret key K is not held within the device as non-volatile digital data.

There are several embodiments of such a PUF. "Signal generator based device security" disclosed in Patent Literature 1 and a "semiconductor device identifier generation method and semiconductor device" disclosed in Patent Literature 2 are representative examples of such embodiments.

Now, secret key generation to be performed by the PUF is briefly described. As the secret key generation to be performed by the PUF, there is known a method using a fuzzy extractor (hereinafter abbreviated as "FE"). Processing procedures to be performed by the FE are shown in tables below as an algorithm 1 and an algorithm 2.

[Table 1]

| Algorithm 1: Key Generation Processing Gen to be performed by FE |
|---|
| Setting: $(n,k,2t+1)$ error correction code $C$, general-purpose hash function $h_A$<br>Input: $l \cdot n$-bit PUF response $W = (w_1, w_2, \cdots, w_l)$.<br>Output: $(K,S) \leftarrow Gen(W)$, $u$-bit key $K$, $l \cdot n$-bit auxiliary data $S = (s_1, s_2, \cdots, s_l)$ |
| 1: $i = 1$ to $l$ do<br>2: generate $k$-bit random number $r_i$<br>3: $c_i \leftarrow Encode_C(r_i)$<br>4: $s_i \leftarrow w_i \oplus c_i$<br>5: end for<br>6: $K \leftarrow h_A(w_1, w_2, \cdots, w_l)$<br>7: return $K, S$ |
| |
| Algorithm 2: Key Reconstruction Processing Rep to be performed by FE |
| Setting: $(n,k,2t+1)$ error correction code $C$, general-purpose hash function $h_A$<br>Input: $l \cdot n$-bit PUF response $W' = (w'_1, w'_2, \cdots, w'_l)$, $l \cdot n$-bit auxiliary data $S = (s_1, s_2, \cdots, s_l)$.<br>Output: $K \leftarrow Rep(W', S)$, $u$-bit key $K$. |
| 1: $i = 1$ to $l$ do<br>2: $c'_i \leftarrow w'_i \oplus s_i$<br>3: $c_i \leftarrow Decode_C(c'_i)$<br>4: $w_i \leftarrow c_i \oplus s_i$<br>5: end for<br>6: $K \leftarrow h_A(w_1, w_2, \cdots, w_l)$<br>7: return $K, S$ |

The algorithm 1 is processing of generating a key corresponding to an initial key for the FE, and the key reconstruction processing of the algorithm 2 is processing of generating the same bit string as that of the initial key.

$Encode_C$ and $Decode_C$ of the algorithm 1 and the algorithm 2 represent encoding processing and correction processing within the error correction code C, respectively. A match between the generated key and the reconstructed key is guaranteed by Expression (1) in terms of a Hamming distance of a PUF response within the algorithm 1 and the algorithm 2.

[Math. 1]

$$\forall i \in \{1, \cdots, l\}, dis_{Ham}(w_i, w'_i) \leq t$$

Further, when an information amount between chips held by a k-bit PUF output is represented by k', Expression (2) is an appropriate design parameter.

[Math. 2]

$$l = \lceil u / k' \rceil$$

TUYL P ET AL: "Strong authentication with physical unclonable functions", 1 January 2007 (2007-01-01), SECURITY, PRIVACY, AND TRUST IN MODERN DATA MANAGEMENT :WITH 13 TABLES, SPRINGER, BERLIN, DE, PAGE(S) 133 - 148, XP009139190, ISBN: 978-3-540-69860-9 refers to strong authentication with physical unclonable functions. Physical unclonable functions (PUFs) can be used as a cost-effective means to store cryptographic key material in an unclonable way. They can be employed for strong authentication of objects, e. g., tokens, and of persons possessing such tokens, but also for other purposes. A short overview of security applications is given where PUFs are useful, and physical realisations, noisy measurements and information content of PUFs are discussed. Then it is described an integrated authentication token containing an optical PUF, a challenging mechanism and a detector. Finally, authentication protocols for controlled and uncontrolled PUFs are discussed.

JORGE GUAJARDO ET AL: "Anti-counterfeiting, key distribution, and key storage in an ambient world via physical unclonable functions", INFORMATION SYSTEMS FRONTIERS; A JOURNAL OF RESEARCH AND INNOVATION, KLUWER ACADEMIC PUBLISHERS, BO, vol. 11, no. 1, 23 October 2008 (2008-10-23), pages 19-41, XP019677732, ISSN: 1572-9419 refers to anti-counterfeiting, key distribution, and key storage in an ambient world via physical unclonable functions.

PIM TUYLS ET AL: "RFID-Tags for Anti-counterfeiting", 1 January 2005 (2005-01-01), TOPICS IN CRYPTOLOGY - CT- RSA 2006 : THE CRYPTOGRAPHERS' TRACK AT THE RSA CONFERENCE 2006, SAN JOSE, CA, USA, FEBRUARY 13-17, 2006 ; PROCEEDINGS; [LECTURE NOTES IN COMPUTER SCIENCE], SPRINGER; BERLIN, DE, PAGE(S) 115-131, XP019026798, ISBN: 978-3-540-31033-4 refers to RFID-tags for anti-counterfeiting.

Citation List

Patent Literature

[PTL 1] JP 2009-524998 A1
[PTL 2] JP 2009-533741 A1

Summary of Invention

Technical Problem

However, the related arts have the following problems.

The above-mentioned authentication protocol does not essentially verify the authenticity of the entire built-in device A, but performs the authentication on the LSI incorporated into the built-in device A. Accordingly, for example, this authentication protocol cannot detect a counterfeit product produced by taking out the LSI of the genuine product that has been discarded once or an electronic board having the LSI mounted thereon and replacing other components such as a casing with new components.

Moreover, for a reason such as use of common components for achieving compatibility or cost reduction, when the same LSI or the electronic board having this LSI mounted thereon is used in two types of models including built-in devices A1 and A2, the above-mentioned authentication protocol cannot detect such an illicit action that the component of the model A1, which is less expensive, is altered to construct the model A2, which is more expensive.

The counterfeit product or illicit product produced by those illicit actions may not be capable of achieving a function and performance intrinsic to the genuine product, and hence such a product may cause a trouble or an accident.

Those problems occur because, although a user of the built-in device can verify the device from the exterior of the device such as a package or a casing, it is difficult for the user to detect a mismatch or inconsistency in terms of an internal configuration of the device. A conceivable cause of such problems is that, although the user of the built-in device can verify information printed on the exterior of the device such as the package or the casing visually or the like, it is difficult for the user to verify whether or not the inside of the built-in device is genuine.

The present invention has been made in view of the above-mentioned problems, and has an object to provide a device authenticity determination system and device authenticity determination method, which enable verification as to whether or not there is a match between an LSI mounted on a built-in device or an electronic board having the LSI mounted thereon and information printed on a casing that is viewable from a user of the built-in device.

Solution to Problem

According to one embodiment of the present invention, there is provided a device authenticity determination system for using printed information, which is viewable from an exterior of a device or a component, the device and component having mounted thereon a semiconductor chip having a PUF function and an encryption function, and includes auxiliary data, for generating secret information being difficult to duplicate with use of the PUF function, and the secret information, the device authenticity determination system comprising a control terminal for reading the printed information, which is viewable, and transmitting the printed information to the semiconductor chip through electronic access means, in which the semiconductor chip further has a tampering determination function of temporarily reconstructing, through the encryption function and the PUF function, the secret information being difficult to duplicate with use of the auxiliary data included in the printed information acquired from the control terminal, performing comparison processing between the secret information included in the printed information and the temporarily-reconstructed secret information being difficult to duplicate, and determining that tampering has occurred when detecting a mismatch between the secret information included in the printed information and the temporarily-reconstructed secret information being difficult to duplicate.

Further, according to one embodiment of the present invention, there is provided a device authenticity determination method to be used for a device authenticity determination system for using printed information, which is viewable from an exterior of a device or a component, the device and the component having mounted thereon a semiconductor chip having a PUF function and an encryption function, and includes auxiliary data, for generating secret information being difficult to duplicate with use of the PUF function, and the secret information, the device authenticity determination method including the steps of: reading, by the control terminal, the printed information, which is viewable, and transmitting the printed information to the semiconductor chip through electronic access means; temporarily reconstructing, by the semiconductor chip, the secret information being difficult to duplicate with use of the auxiliary data included in the printed information acquired from the control terminal; and performing, by the semiconductor chip, comparison processing between the secret information included in the printed information and the temporarily-reconstructed secret information being difficult to duplicate, and determining that tampering has occurred when detecting a mismatch between the secret information included in the printed information and the temporarily-reconstructed secret information being difficult to duplicate.

Advantageous Effects of Invention

According to the one embodiment of the present invention, through the determination as to whether or not there is a match between the printed information attached to the casing of the built-in device having the semiconductor chip mounted thereon and the printed information generated by the currently-mounted semiconductor chip based on the result of reading the printed information, it is possible to provide the device authenticity determination system and device authenticity determination method, which enable the verification as to whether or not there is a match between the LSI mounted on the built-in device or the electronic board having the LSI mounted thereon and the information printed on the casing that is viewable from the user of the built-in device.

Brief Description of Drawings

FIG. 1 is an overall configuration diagram of a device authenticity determination system according to a first embodiment of the present invention.
FIG. 2 is a block diagram for illustrating a configuration of printed information according to the first embodiment of the present invention.
FIG. 3 is a flowchart for illustrating a series of processing to be performed between a control terminal and a master device according to the first embodiment of the present invention.
FIG. 4 is a flowchart for illustrating a series of processing to be performed between a server and the master device according to the first embodiment of the present invention.
FIG. 5 is a block diagram for illustrating a configuration of printed information to be adopted in a public key cryptosystem according to the first embodiment of the present invention.
FIG. 6 is a flowchart for illustrating a series of processing to be performed at the time of maintenance according to a second embodiment of the present invention.
FIG. 7 is a block diagram for illustrating a configuration of printed information after a change according to the second embodiment of the present invention.

Description of Embodiments

Now, a description is given of a device authenticity determination system and a device authenticity determination method according to preferred embodiments of the present invention with reference to the drawings.

First Embodiment

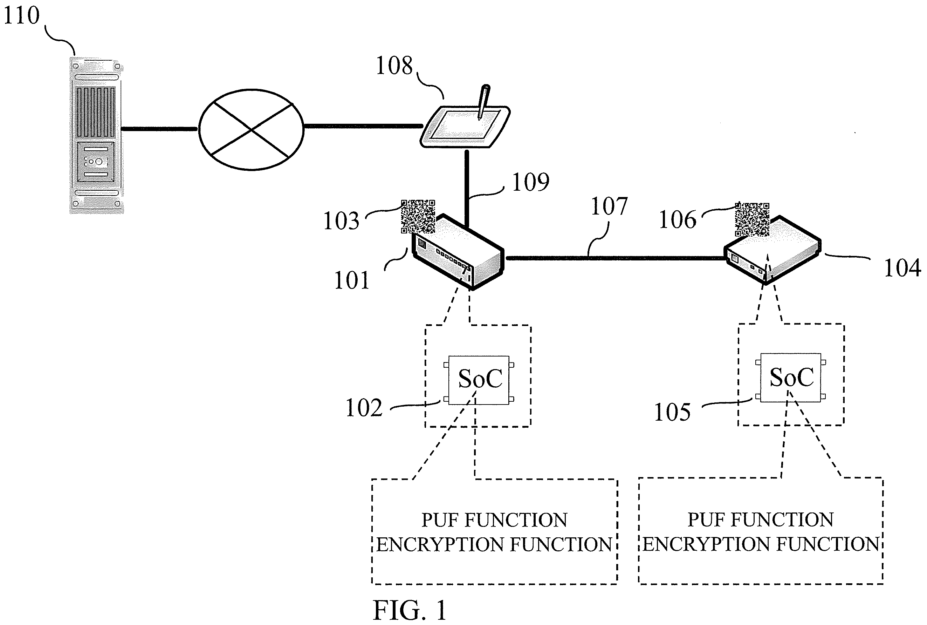

FIG. 1 is an overall configuration diagram of a device authenticity determination system according to a first embodiment of the present invention. A master device 101 has a system on chip (SoC) 102, which is a main constituent element of the device, and the SoC 102 has a PUF function and an encryption function. Further, the master device 101 has printed information 103 on its casing. The printed information includes, in addition to general product-related information I such as a model number, rating, manufacture date, and serial number of the device, a security code, which is a point of the present invention. The printed information is printed in a form of a QR code (trademark) or a barcode, for example.

Similarly, a slave device 104 has an SoC 105 and printed information 106, and is connected to the master device 101 via a communication channel 107. The master device 101 is connected to a control terminal 108 via a communication channel 109, and the slave device 104 is connected to the control terminal 108 via the communication channel 107, the master device 101, and the communication channel 109.

Such connections enable the control terminal 108 to make necessary settings of the master device 101 and the slave device 104. In this case, a device such as a PC or a tablet computer is assumed as the control terminal 108. Further, the control terminal 108 is connected to a server 110 via the Internet. Note that, in the following, when what is common to both of the master device 101 and the slave device 104 is described, those devices are each simply referred to as "device".

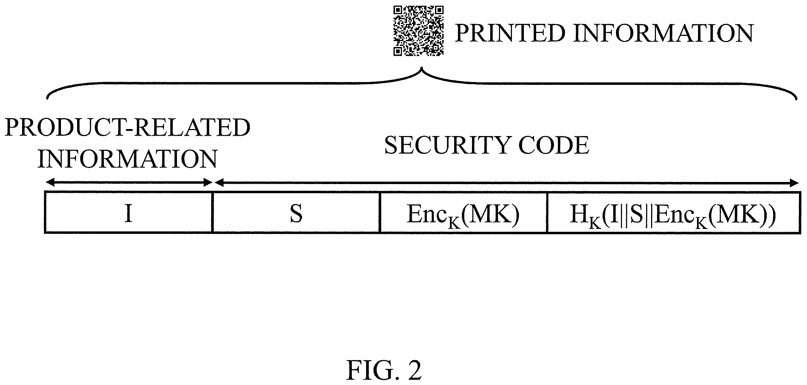

FIG. 2 is a block diagram for illustrating a configuration of the printed information according to the first embodiment of the present invention. The printed information 103 and the printed information 106 are each formed of the product-related information I and the security code. The security code in this case is formed of the following three pieces of information.

- Auxiliary data S, which is output from the PUF of the SoC mounted on the device to which the printed information is attached.
- Data $Enc_K(MK)$, which is obtained by encrypting a master key MK with the use of secret information K, which is generated by the PUF in a manner that corresponds to the auxiliary data S.
- A keyed hash value $H_K(I\|S\|Enc_K(MK))$ having K as a key, which is generated based on a concatenated data string of I, S, and $Enc_K(MK)$. Note that, the HMAC method can be given as an example of calculation of the keyed hash value. In this case, "$\|$" means concatenation of bits.

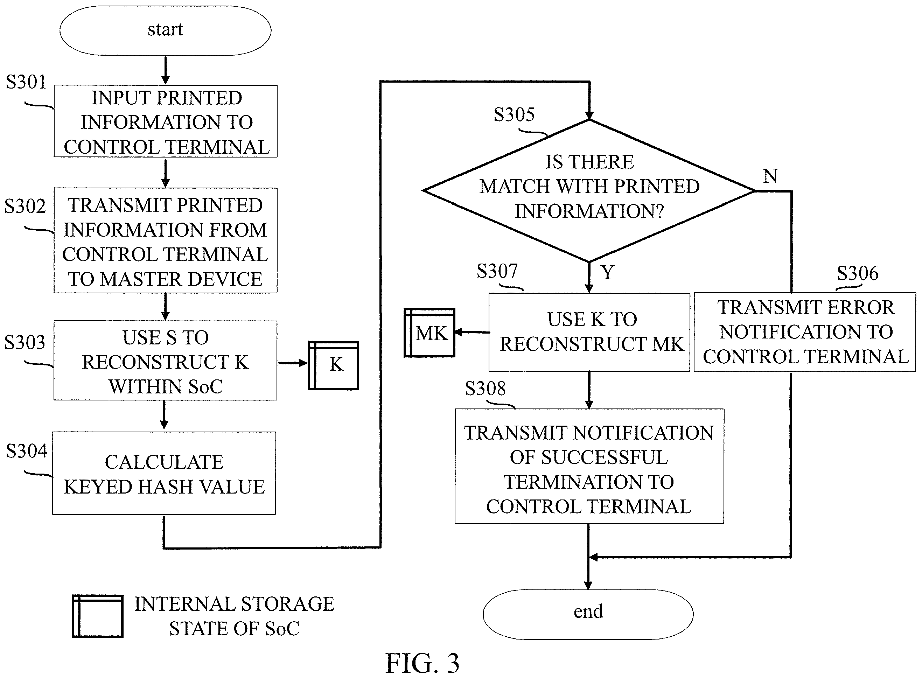

Next, a description is given of an operation of the device authenticity determination system according to the first embodiment having the configuration illustrated in FIG. 1. FIG. 3 is a flowchart for illustrating a series of processing to be performed between the control terminal and the master device according to the first embodiment of the present invention. First, with reference to FIG. 3, a description is given of the operation to be performed between the control terminal 108 and the master device 101.

A purchaser of the device inputs the printed information 103 to the control terminal 108 (Step S301). Next, the printed information is transmitted from the control terminal 108 to the master device 101 (Step S302). The SoC 102 of the master device 101 reconstructs the key MK from the transmitted printed information through the following procedure.

The SoC 102 activates a key reconstruction function of the FE, which is to be performed by the PUF within the SoC. Specifically, the SoC 102 uses the auxiliary data S, which is a part of the printed information, to reconstruct the secret key K as follows (Step S303).

$$K \leftarrow Rep(W', S)$$

Next, the SoC 102 uses the reconstructed K to calculate the keyed hash value based on the printed information (Step S304). Specifically, the SoC 102 calculates $H_K(I\|S\|Enc_K(MK))$, and verifies whether or not there is a match between the calculated value and the keyed hash value of the printed information (Step S305).

In Step S305, when a match between the values cannot be verified, the master device 101 transmits a notification that there is no match to the control terminal 108 (Step S306), and interrupts the processing. On the other hand, when a match between the values can be verified, the processing proceeds to the next step, which is Step S307.

Finally, the SoC 102 uses the secret key K to decrypt $Enc_K(MK)$, which is a part of the printed information, to thereby reconstruct MK (Step S307), and the master device 101 transmits a notification of a successful termination to the control terminal 108 (Step S308). Then, the series of processing is completed.

Processing similar to the one for the master device 101 is also performed on the slave device 104. Note that, the slave device 104 communicates to and from the control terminal 108 via the master device 101.

When the printed information does not correspond to the SoC (102, 105) of the device, the true K cannot be reconstructed due to the property of the PUF. Accordingly, there occurs a mismatch with the keyed hash value written as the printed information, which enables the detection of an illicit product.

Next, a description is given of an operation to be performed between the master device 101 and the server 110 via the control terminal 108. This operation is performed in order that the purchaser of the device, who has the genuine product, receives an appropriate service for the device from a manufacturer.

As described above in the operation of FIG. 3, when the purchaser's device is the genuine product, a state in which the correct MK is reconstructed in the SoC is reached. Further, MK is information set by the manufacturer, and the server 110 holds the correct MK. Accordingly, if the purchaser's device is the genuine product, at the time when the operation illustrated in FIG. 3 is finished, a state in which the device and the server 110 share the same key is reached.

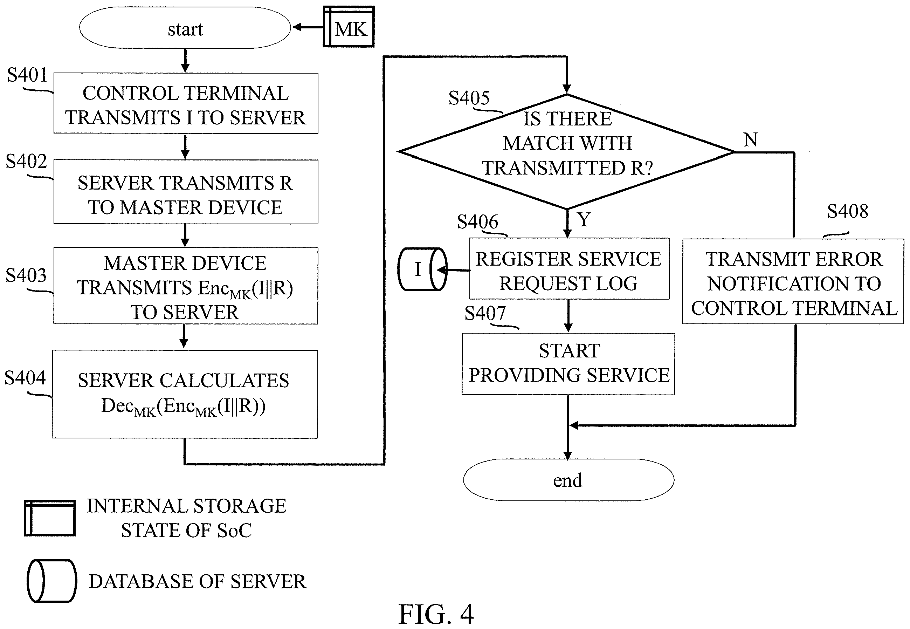

FIG. 4 is a flowchart for illustrating a series of processing to be performed between the server and the master device according to the first embodiment of the present invention. Now, a description is given with reference to FIG. 4. The purchaser of the device uses the control terminal 108 to transmit the product-related information I to the server 110 via the network, and makes a request for the service (Step S401). The server 110 transmits a random number R to the master device 101 via the control terminal 108 (Step S402).

The master device 101 encrypts the product-related information I, which is transmitted to within the SoC in Step S302, and the random number R with the use of MK, and transmits the resultant data to the server 110 via the control terminal 108 (Step S403). Specifically, the master device 101 transmits $Enc_{MK}(I\|R)$.

The server 110 decrypts the received $Enc_{MK}(I\|R)$ with the use of MK (Step S404), and verifies whether or not there is a match of I and R (Step S405). When it is verified that there is a match, the server 110 registers the service request from the product-related information I in a database as a log (Step S406), and starts providing the service (Step S407). On the other hand, when it is verified that there is a mismatch, the server 110 does not provide the service, but issues an error notification to the service request (Step S408).

Processing similar to the one for the master device 101 is also performed on the slave device 104. Note that, the slave device 104 communicates to and from the control terminal 108 via the master device 101.

Examples of the service to be provided by the server 110 include updating of a program and parameter of the device, and notification of maintenance timing. Service information or a part thereof is provided in a form in which the service information is encrypted with the use of the secret information MK, or in such a form as to enable detection of tampering. The device can receive a secure service by performing decryption and detection of tampering with the use of MK held therein.

In the above description of the first embodiment, the common key MK is used to perform the authentication between the server 110 and the control terminal 108. On the other hand, as described above in the "Background Art" section, an equivalent function can be achieved with a public key cryptosystem using a pair of public keys (SK, PK).

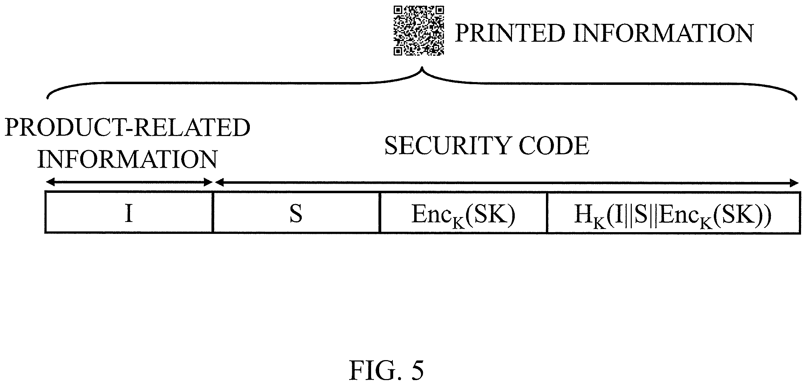

FIG. 5 is a block diagram for illustrating a configuration of printed information to be adopted in the public key cryptosystem according to the first embodiment of the present invention. As compared with the above-mentioned configuration of the printed information to be adopted in the common key cryptosystem illustrated in FIG. 2, in the configuration of FIG. 5, $Enc_K(SK)$ is used in place of $Enc_K(MK)$ as the printed information, and $H_K(I\|S\|Enc_K(SK))$ is used in place of $H_K(I\|S\|Enc_K(MK))$ as the keyed hash value. Further, the server 110 uses the public key PK to determine whether or not the service can be provided. In this way, when the public key cryptosystem is adopted, the burden of information management on the authenticator's side can be alleviated.

Second Embodiment

In a second embodiment of the present invention, a description is given of a case where easiness in changing of the printed information is considered. The manufacturer inputs, to the master device 101, the product-related information I and the secret key MK that are scheduled to be printed on the casing, and causes the master device 101 to execute the following key generation processing.

$$(K, S) \leftarrow Gen(W)$$

The master device 101 encrypts MK with the use of the generated K, and outputs S and $Enc_K(MK)$ to the outside. At this time, the SoC does not output K.

In the format of the printed information of FIG. 2 according to the first embodiment described above, the SoC calculates, as the security code, $H_K(I\|S\|Enc_K(MK))$ in addition to S and $Enc_K(MK)$, and outputs the calculated security code to the outside. However, in the second embodiment, the manufacturer can calculate the keyed hash value by receiving S from the SoC.

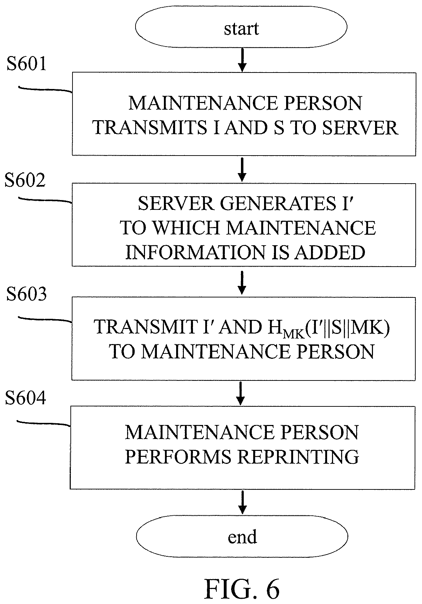

FIG. 6 is a flowchart for illustrating a series of processing to be performed at the time of maintenance according to the second embodiment of the present invention. In this case, maintenance that does not involve a change of the SoC is assumed. Note that, maintenance involving a change of the SoC, namely, maintenance corresponding to replacement of the device, is performed based on the same flow as the one performed at the time of manufacture.

After finishing repairing the device, a maintenance person requests, via the control terminal, the service illustrated in Step S406 of FIG. 4 from the server 110. At this time, it is assumed that the device has transitioned to a state in which the device holds MK within the SoC in accordance with the flowchart of FIG. 3. It is also assumed that the server 110 can separately verify the authenticity of the maintenance person in accordance with general access control.

The maintenance person transmits I and S to the server 110, and makes a printed information reissuance request (Step S601). In response to this request, the server 110 adds, to the product-related information I, information such as execution of maintenance, a date of maintenance, and the maintenance person as information identifiable to the server, to thereby change the product information I to I' (Step S602).

Further, the server 110 uses the changed I' and S, and MK held by the server to calculate $H_{MK}(I'\|S\|MK)$, and transmits I' and $H_{MK}(I'\|S\|MK)$ to the maintenance person (Step S603).

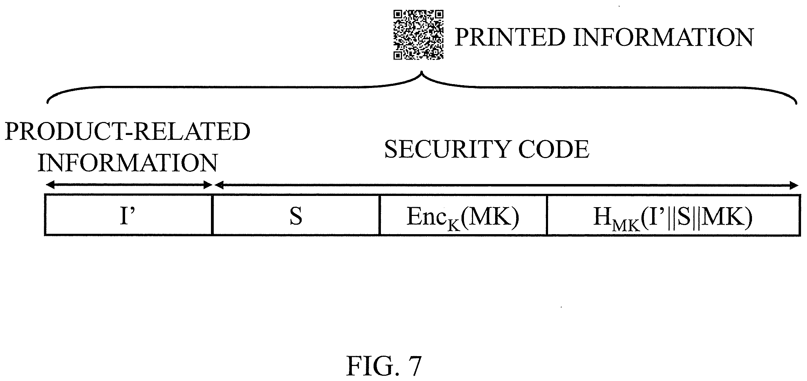

FIG. 7 is a block diagram for illustrating a configuration of the printed information after the change according to the second embodiment of the present invention. The maintenance person generates the printed information in a format illustrated in FIG. 7, and reprints the information on the casing by replacing a current sticker with a new sticker, for example (Step S604).

As described above, through the series of processing of the flowchart illustrated in FIG. 6, the maintenance can be performed without revealing the secret information MK to the maintenance person, and hence it is possible to reduce a threat to this system.

## Claims

1. A device authenticity determination system for using a semiconductor chip (102) having a PUF function and for using printed information (103), the printed information (103) is viewable from an exterior of a device (101) or a component, the device (101) and the component having mounted thereon the semiconductor chip (102), and the printed information (103) includes auxiliary data, for generating secret information with use of the PUF function, data obtained by encrypting a master key with the use of the secret information, and keyed hash value calculated with the use of the master key as a key against a concatenated data including the auxiliary data and product related information included in said printed information and the encrypted data,
   the device authenticity determination system comprising a control terminal (108) for reading the printed information (103), which is viewable, and transmitting the printed information (103) to the semiconductor chip (102) through electronic access means,
   wherein the semiconductor chip (102) further has a confirmation function of temporarily reconstructing, through the PUF function, the secret information with use of the auxiliary data included in the printed information (103) acquired from the control terminal (108), calculating keyed hash value against the concatenated data included in the printed information (103) with use of the temporarily-reconstructed secret information, and confirming whether or not there is a match between the keyed hash value included in the printed information (103) and the keyed hash value calculated with the use of the temporarily-reconstructed secret information.

2. A device authenticity determination system according to claim 1,
   wherein the printed information (103) further comprises information obtained by protecting second secret information set by a manufacturer of the device (101) or the component with use of the secret information being difficult to duplicate, and
   wherein, through the PUF function, the semiconductor chip (102) reconstructs the second secret information after reconstructing the secret information, and through the confirmation function, the semiconductor chip (102) confirms whether or not there is a match between the second secret information set by the manufacturer and the reconstructed second secret information.

3. A device authenticity determination system according to claim 2, wherein the semiconductor chip (102) verifies appropriateness of the reconstructed second secret information through hash calculation for determining appropriateness.

4. A device authenticity determination system according to claim 2, further comprising a server (110) connected to the control terminal (108) via a network,

wherein the semiconductor chip (102) transmits, through the control terminal (108), the reconstructed second secret information to the server (110) via the network, and

wherein the server (110) compares the second secret information reconstructed by the semiconductor chip (102) with second secret information held by itself to verify validity of the device (101) or the component having the semiconductor chip (102) mounted thereon, and after verifying the validity when a comparison result indicates a match between the second secret information reconstructed by the semiconductor chip (102) and the second secret information held by itself, provides service information to the device (101) or the component.

5. A device authenticity determination system according to claim 4,

wherein the server (110) encrypts the service information with use of the second secret information, and transmits the encrypted service information, and

wherein the semiconductor chip (102) that has transmitted the reconstructed second secret information acquires the service information encrypted with use of the second secret information, and decrypts the service information with use of the second secret information reconstructed by itself, to thereby acquire the service information from the server (110) .

6. A device authenticity determination system according to claim 4 or 5,

wherein based on an operation of a maintenance person, the control terminal (108) transmits a printed information (103) reissuance request comprising the auxiliary data to the server (110),

wherein when receiving the printed information (103) reissuance request from the control terminal (108), the server (110) uses the second secret information to generate new printed information (103) to which maintenance information is added, and returns the generated new printed information (103) to the control terminal (108) that has transmitted the printed information (103) reissuance request, and

wherein the control terminal (108) reprints the new printed information (103) in order that the printed information (103), which is viewable, is updated with the received new printed information

7. A built-in device system according to any of claims 1 to 5 wherein said semiconductor chip further has a confirmation function of acquiring the printed information through electronic access means.

8. A device authenticity determination method to be used for a device authenticity determination system for using a semiconductor chip (102) having a PUF function and for using printed information (103), the printed information (103) is viewable from an exterior of a device (101) or a component, the device (101) and the component having mounted thereon the semiconductor chip (102), and the printed information (103) includes auxiliary data, for generating secret information with use of the PUF function, data obtained by encrypting a master key with the use of the secret information, and keyed hash value calculated with the use of the master key as a key against a concatenated data including the auxiliary data and product related information included in said printed information and the encrypted data,

the device authenticity determination method including the steps of:

reading, by a control terminal (108), the printed information (103), which is viewable, and transmitting the printed information (103) to the semiconductor chip (102) through electronic access means;

temporarily reconstructing, by the semiconductor chip (102), the secret information with use of the auxiliary data included in the printed information (103) acquired from the control terminal (108); and

calculating, by the semiconductor chip (102), keyed hash value against the concatenated data included in the printed information (103) with use of the temporarily-reconstructed secret information, and confirming whether or not there is a match between the keyed hash value included in the printed information (103) and the keyed hash value calculated with the use of the temporarily-reconstructed secret information.

9. A built-in device having a semiconductor chip mounted thereon comprising the semiconductor chip (102) according to any of claims 1 to 5; wherein the semiconductor chip (102) further has a confirmation function of acquiring the printed information through electronic access means.

**Patentansprüche**

1. Gerätauthentizitätsbestimmungssystem zum Verwenden eines Halbleiterchips (102) mit einer PUF-Funktion und zum Verwenden von gedruckten Informationen (103), wobei die gedruckten Informationen (103) von einer Außenseite eines Geräts (101) oder eines Bauteils sichtbar sind, wobei das Gerät (101) und das Bauteil darauf angebracht den Halbleiterchip (102) aufweisen, und wobei die gedruckten Informationen (103) enthalten Hilfsdaten zum Erzeugen geheimer Informationen unter Verwendung der PUF-Funktion, Daten, die durch Verschlüsseln eines Hauptschlüssels unter Verwendung der geheimen Informationen erhalten werden, und einen verschlüsselten Hashwert, der unter Verwendung des Hauptschlüssels als ein Schlüssel berechnet wird anhand konkatenierter Daten, umfassend die Hilfsdaten und produktbezogene Informationen, die in den gedruckten Informationen enthalten sind, und die verschlüsselten Daten,

wobei das Gerätauthentizitätsbestimmungssystem ein Steuerendgerät (108) zum Lesen der gedruckten Informationen (103), die sichtbar sind, und zum Übertragen der gedruckten Informationen (103) an den Halbleiterchip (102) durch elektronische Zugriffsmittel umfasst,

wobei der Halbleiterchip (102) ferner enthält eine Bestätigungsfunktion des temporären Rekonstruierens, durch die PUF-Funktion, der geheimen Informationen unter Verwendung der Hilfsdaten, die in den gedruckten Informationen (103) enthalten sind, die vom Steuerendgerät (108) erworben wurden, Berechnens des verschlüsselten Hash-Werts anhand der konkatenierten Daten, die in den gedruckten Informationen (103) enthalten sind, unter Verwendung der temporär rekonstruierten geheimen Informationen, und Bestätigens, ob oder ob nicht eine Übereinstimmung zwischen dem verschlüsselten Hashwert, der in den gedruckten Informationen (103) enthalten ist, und dem verschlüsselten Hashwert, der unter Verwendung der temporär rekonstruierten geheimen Informationen berechnet wurde, vorhanden ist.

2.    Gerätauthentizitätsbestimmungssystem nach Anspruch 1,
wobei die gedruckten Informationen (103) ferner Informationen umfassen, die durch Schützen von zweiten geheimen Informationen, die von einem Hersteller des Geräts (101) oder des Bauteils festgelegt wurden, erhalten werden unter Verwendung der geheimen Informationen, die schwer zu duplizieren sind, und
wobei, durch die PUF-Funktion, der Halbleiterchip (102) die zweiten geheimen Informationen rekonstruiert nach Rekonstruieren der geheimen Informationen, und durch die Bestätigungsfunktion der Halbleiterchip (102) bestätigt, ob oder ob nicht eine Übereinstimmung zwischen den durch den Hersteller festgelegten zweiten geheimen Informationen und den rekonstruierten zweiten geheimen Informationen vorhanden ist.

3.    Gerätauthentizitätsbestimmungssystem nach Anspruch 2, wobei der Halbleiterchip (102) die Richtigkeit der rekonstruierten zweiten geheimen Informationen verifiziert durch Hashberechnung zum Bestimmen von Richtigkeit.

4.    Gerätauthentizitätsbestimmungssystem nach Anspruch 2, ferner umfassend einen Server (110), der mit dem Steuerendgerät (108) über ein Netzwerk verbunden ist,
wobei der Halbleiterchip (102) durch das Steuerendgerät (108) die rekonstruierten zweiten geheimen Informationen über das Netzwerk an den Server (110) überträgt, und
wobei der Server (110) die durch den Halbleiterchip (102) rekonstruierten zweiten geheimen Informationen mit den in ihm selbst enthaltenen zweiten geheimen Informationen vergleicht, um Validität des Geräts (101) oder des Bauteils, das den darauf angebrachten Halbleiterchip (102) aufweist, zu verifizieren, und nach Verifizieren der Validität, wenn ein Vergleichsergebnis eine Übereinstimmung zwischen den durch den Halbleiterchip (102) rekonstruierten zweiten geheimen Informationen und den in ihm selbst enthaltenen zweiten geheimen Informationen anzeigt, Dienstleistungsinformationen dem Gerät (101) oder dem Bauteil bereitstellt.

5.    Gerätauthentizitätsbestimmungssystem nach Anspruch 4,
wobei der Server (110) die Dienstleistungsinformationen unter Verwendung der zweiten geheimen Informationen verschlüsselt und die verschlüsselten Dienstleistungsinformationen überträgt, und
wobei der Halbleiterchip (102), der die rekonstruierten zweiten geheimen Informationen übertragen hat, die unter Verwendung der zweiten geheimen Informationen verschlüsselten Dienstleistungsinformationen erwirbt, und die Dienstleistungsinformationen unter Verwendung der durch ihn selbst rekonstruierten zweiten geheimen Informationen entschlüsselt, um dadurch die Dienstleistungsinformationen vom Server (110) zu erwerben.

6.    Gerätauthentizitätsbestimmungssystem nach Anspruch 4 oder 5,
wobei basierend auf einer Operation durch Instandhaltungspersonal das Steuerendgerät (108) eine Wiederausgabeanforderung gedruckter Informationen (103), umfassend die Hilfsdaten, an den Server überträgt,
wobei beim Empfangen der Wiederausgabeanforderung gedruckter Informationen (103) vom Steuerendgerät (108), der Server (110) die zweiten geheimen Informationen verwendet, um neue gedruckte Informationen zu erzeugen, zu denen Instandhaltungsinformationen hinzugefügt sind, und die erzeugten neuen gedruckten Informationen (103) an das Steuerendgerät (108), das die Wiederausgabeanforderung gedruckter Informationen (103) übertragen hat, zurückgibt, und wobei das Steuerendgerät (108) die neuen gedruckten Informationen (103) neu druckt, so dass die gedruckten Informationen (103), die sichtbar sind, mit den empfangenen neuen gedruckten Informationen aktualisiert werden.

7. Integriertes Gerätsystem gemäß einem der Ansprüche 1 bis 5, wobei der Halbleiterchip ferner eine Bestätigungsfunktion des Erwerbens der gedruckten Informationen durch elektronische Zugriffsmittel aufweist.

8. Gerätauthentizitätsbestimmungsverfahren, das für ein Gerätauthentizitätsbestimmungssystem zum Verwenden eines Halbleiterchips (102) mit einer PUF-Funktion und zum Verwenden gedruckter Informationen (103) zu verwenden ist, wobei die gedruckten Informationen (103) von einer Außenseite eines Geräts (101) oder eines Bauteils sichtbar sind, das Gerät (101) und das Bauteil einen darauf angebrachten Halbleiterchip (102) aufweisen, und die gedruckten Informationen (103) enthalten Hilfsdaten zum Erzeugen von geheimen Informationen unter Verwendung der PUF-Funktion, Daten, die durch Verschlüsseln eines Hauptschlüssels unter Verwendung der geheimen Informationen erhalten werden, und einen verschlüsselten Hashwert, der unter Verwendung des Hauptschlüssels als ein Schlüssel berechnet wird anhand der konkatenierten Daten, die die Hilfsdaten und produktbezogene Informationen, die in den gedruckten Informationen enthalten sind, und die verschlüsselten Daten enthalten.

wobei das Gerätauthentizitätsbestimmungsverfahren die Schritte umfasst:

Lesen, durch ein Steuerendgerät (108), der gedruckten Informationen (103), die sichtbar sind, und Übertragen der gedruckten Informationen (103) an den Halbleiterchip (102) durch elektronische Zugriffsmittel;
temporäres Rekonstruieren, durch den Halbleiterchip (102), der geheimen Informationen unter Verwendung der Hilfsdaten, die in den gedruckten Informationen (103) enthalten sind, die vom Steuerendgerät (108) erworben wurden; und
Berechnen, durch den Halbleiterchip (102), eines verschlüsselten Hashwertes anhand der in den gedruckten Informationen (103) enthaltenen konkatenierten Daten unter Verwendung der temporär rekonstruierten geheimen Informationen, und Bestätigen, ob oder ob nicht eine Übereinstimmung zwischen dem in den gedruckten Informationen (103) enthaltenen verschlüsselten Hashwert und dem unter Verwendung der temporär rekonstruierten geheimen Informationen berechneten verschlüsselten Hashwert vorhanden ist.

9. Integriertes Gerät mit einem darauf angebrachten Halbleiterchip, umfassend den Halbleiterchip (102) nach einem der Ansprüche 1 bis 5; wobei der Halbleiterchip (102) ferner eine Bestätigungsfunktion des Erwerbens der gedruckten Informationen durch elektronische Zugriffsmittel aufweist.

## Revendications

1. Système de détermination d'authenticité de dispositif en vue d'utiliser une puce semi-conductrice (102) présentant une fonction physique non clonable, PUF, et d'utiliser des informations imprimées (103), dans lequel les informations imprimées (103) sont visualisables depuis l'extérieur d'un dispositif (101) ou d'un composant, dans lequel la puce semi-conductrice (102) est montée sur le dispositif (101) et sur le composant, et les informations imprimées (103) incluent des données auxiliaires, en vue de générer des informations secrètes, en faisant appel à la fonction PUF, des données obtenues en chiffrant une clé maîtresse, en faisant appel aux informations secrètes, et une valeur de hachage à clé calculée en faisant appel à la clé maîtresse, en tant qu'une clé, par rapport à des données concaténées incluant les données auxiliaires et des informations connexes au produit incluses dans lesdites informations imprimées et les données chiffrées ;
le système de détermination d'authenticité de dispositif comprenant un terminal de commande (108) destiné à lire les informations imprimées (103), lesquelles sont visualisables, et à transmettre les informations imprimées (103) à la puce semi-conductrice (102) à travers un moyen d'accès électronique ;
dans lequel la puce semi-conductrice (102) présente en outre une fonction de confirmation destinée à reconstituer temporairement, par l'intermédiaire de la fonction PUF, les informations secrètes, en faisant appel aux données auxiliaires incluses dans les informations imprimées (103) acquises à partir du terminal de commande (108), à calculer une valeur de hachage à clé, par rapport aux données concaténées incluses dans les informations imprimées (103), en faisant appel aux informations secrètes temporairement reconstituées, et à confirmer s'il existe ou non une correspondance entre la valeur de hachage à clé incluse dans les informations imprimées (103) et la valeur de hachage à clé calculée en faisant appel aux informations secrètes temporairement reconstituées.

2. Système de détermination d'authenticité de dispositif selon la revendication 1,
dans lequel les informations imprimées (103) comprennent en outre des informations obtenues en protégeant des secondes informations secrètes définies par un fabricant du dispositif (101) ou du composant, en faisant appel aux informations secrètes qui sont difficiles à reproduire ; et

dans lequel, par le biais de la fonction PUF, la puce semi-conductrice (102) reconstitue les secondes informations secrètes, suite à la reconstitution des informations secrètes, et par le biais de la fonction de confirmation, la puce semi-conductrice (102) confirme s'il existe ou non une correspondance entre les secondes informations secrètes définies par le fabricant et les secondes informations secrètes reconstituées.

3. Système de détermination d'authenticité de dispositif selon la revendication 2, dans lequel la puce semi-conductrice (102) vérifie l'adéquation des secondes informations secrètes reconstituées par le biais d'un calcul de hachage pour déterminer l'adéquation.

4. Système de détermination d'authenticité de dispositif selon la revendication 2, comprenant en outre un serveur (110) connecté au terminal de commande (108) par l'intermédiaire d'un réseau ;
dans lequel la puce semi-conductrice (102) transmet, par le biais du terminal de commande (108), les secondes informations secrètes reconstituées, au serveur (110), par l'intermédiaire du réseau ; et
dans lequel le serveur (110) compare les secondes informations secrètes reconstituées par la puce semi-conductrice (102) à des secondes informations secrètes détenues par lui-même, en vue de vérifier la validité du dispositif (101) ou du composant sur lequel la puce semi-conductrice (102) est montée, et suite à la vérification de la validité, lorsqu'un résultat de comparaison indique une correspondance entre les secondes informations secrètes reconstituées par la puce semi-conductrice (102) et les secondes informations secrètes détenues par lui-même, le serveur fournit des informations de service au dispositif (101) ou au composant.

5. Système de détermination d'authenticité de dispositif selon la revendication 4,
dans lequel le serveur (110) chiffre les informations de service en faisant appel aux secondes informations secrètes, et transmet les informations de service chiffrées ; et
dans lequel la puce semi-conductrice (102) qui a transmis les secondes informations secrètes reconstituées acquiert les informations de service chiffrées en faisant appel aux secondes informations secrètes, et déchiffre les informations de service en faisant appel aux secondes informations secrètes reconstituées par elle-même, en vue d'acquérir par conséquent les informations de service à partir du serveur (110).

6. Système de détermination d'authenticité de dispositif selon la revendication 4 ou 5,
dans lequel, sur la base d'une opération réalisée par un technicien de maintenance, le terminal de commande (108) transmet une demande de réémission d'informations imprimées (103) comprenant les données auxiliaires, au serveur (110) ;
dans lequel, suite à la réception de la demande de réémission d'informations imprimées (103) en provenance du terminal de commande (108), le serveur (110) utilise les secondes informations secrètes en vue de générer de nouvelles informations imprimées (103) auxquelles des informations de maintenance sont ajoutées, et renvoie les nouvelles informations imprimées générées (103) au terminal de commande (108) qui a transmis la demande de réémission d'informations imprimées (103) ; et
dans lequel le terminal de commande (108) réimprime les nouvelles informations imprimées (103) afin que les informations imprimées (103), qui sont visualisables, soient mises à jour avec les nouvelles informations imprimées reçues.

7. Système de dispositif intégré selon l'une quelconque des revendications 1 à 5, dans lequel ladite puce semi-conductrice présente en outre une fonction de confirmation destinée à acquérir les informations imprimées à travers un moyen d'accès électronique.

8. Procédé de détermination d'authenticité de dispositif destiné à être utilisé pour un système de détermination d'authenticité de dispositif en vue d'utiliser une puce semi-conductrice (102) présentant une fonction physique non clonable, PUF, et d'utiliser des informations imprimées (103), dans lequel les informations imprimées (103) sont visualisables depuis l'extérieur d'un dispositif (101) ou d'un composant, dans lequel la puce semi-conductrice (102) est montée sur le dispositif (101) et sur le composant, et les informations imprimées (103) incluent des données auxiliaires, en vue de générer des informations secrètes, en faisant appel à la fonction PUF, des données obtenues en chiffrant une clé maîtresse, en faisant appel aux informations secrètes, et une valeur de hachage à clé calculée en faisant appel à la clé maîtresse, en tant qu'une clé, par rapport à des données concaténées incluant les données auxiliaires et des informations connexes au produit incluses dans lesdites informations imprimées et les données chiffrées ;
le procédé de détermination d'authenticité de dispositif incluant les étapes ci-dessous consistant à :

lire, par le biais d'un terminal de commande (108), les informations imprimées (103), lesquelles sont visualisables, et transmettre les informations imprimées (103) à la puce semi-conductrice (102) à travers un moyen d'accès électronique ;

reconstituer temporairement, par le biais de la puce semi-conductrice (102), les informations secrètes, en faisant appel aux données auxiliaires incluses dans les informations imprimées (103) acquises à partir du terminal de commande (108) ; et

calculer, par le biais de la puce semi-conductrice (102), une valeur de hachage à clé, par rapport aux données concaténées incluses dans les informations imprimées (103), en faisant appel aux informations secrètes temporairement reconstituées, et confirmer s'il existe ou non une correspondance entre la valeur de hachage à clé incluse dans les informations imprimées (103) et la valeur de hachage à clé calculée en faisant appel aux informations secrètes temporairement reconstituées.

9. Dispositif intégré sur lequel est montée une puce semi-conductrice comprenant la puce semi-conductrice (102) selon l'une quelconque des revendications 1 à 5 ; dans lequel la puce semi-conductrice (102) présente en outre une fonction de confirmation destinée à

acquérir les informations imprimées à travers un moyen d'accès électronique.

FIG. 1

PRINTED INFORMATION

PRODUCT-RELATED
INFORMATION

SECURITY CODE

| I | S | $Enc_K(MK)$ | $H_K(I\|S\|Enc_K(MK))$ |
|---|---|---|---|

FIG. 2

EP 2 999 156 B1

EP 2 999 156 B1

```
                    ┌─────────────┐
                    │    start    │
                    └─────────────┘
                           │
                           ▼
S301    ┌──────────────────────────────┐
        │       INPUT PRINTED          │
        │      INFORMATION TO          │
        │     CONTROL TERMINAL         │
        └──────────────────────────────┘
                           │
                           ▼
S302    ┌──────────────────────────────┐
        │      TRANSMIT PRINTED        │
        │     INFORMATION FROM         │
        │     CONTROL TERMINAL         │
        │     TO MASTER DEVICE         │
        └──────────────────────────────┘
                           │
                           ▼
S303    ┌──────────────────────────────┐      ┌───┐
        │        USE S TO              │ ───▶ │ K │
        │     RECONSTRUCT K            │      └───┘
        │      WITHIN SoC              │
        └──────────────────────────────┘
                           │
                           ▼
S304    ┌──────────────────────────────┐
        │        CALCULATE             │
        │     KEYED HASH VALUE         │
        └──────────────────────────────┘
```

S305 — IS THERE MATCH WITH PRINTED INFORMATION?

N → S306 TRANSMIT ERROR NOTIFICATION TO CONTROL TERMINAL

Y → S307 USE K TO RECONSTRUCT MK → MK

S308 TRANSMIT NOTIFICATION OF SUCCESSFUL TERMINATION TO CONTROL TERMINAL

end

☐ INTERNAL STORAGE STATE OF SoC

FIG. 3

EP 2 999 156 B1

```
                    start  ◄── MK

S401   CONTROL TERMINAL
       TRANSMITS I TO SERVER

S402   SERVER TRANSMITS R
       TO MASTER DEVICE

S403   MASTER DEVICE
       TRANSMITS Enc_MK(I‖R)
       TO SERVER

S404   SERVER CALCULATES
       Dec_MK(Enc_MK(I‖R))
```

S405  IS THERE MATCH WITH TRANSMITTED R?   → N

S406  REGISTER SERVICE REQUEST LOG  → I

S407  START PROVIDING SERVICE

S408  TRANSMIT ERROR NOTIFICATION TO CONTROL TERMINAL

end

□ INTERNAL STORAGE STATE OF SoC

⬭ DATABASE OF SERVER

FIG. 4

PRINTED INFORMATION

PRODUCT-RELATED
INFORMATION

SECURITY CODE

| I | S | $Enc_K(SK)$ | $H_K(I\|S\|Enc_K(SK))$ |
|---|---|---|---|

FIG. 5

EP 2 999 156 B1

```
                    ┌──────────────┐
                    │    start     │
                    └──────┬───────┘
                           │
S601                       ▼
        ┌──────────────────────────────────────┐
        │         MAINTENANCE PERSON            │
        │    TRANSMITS I AND S TO SERVER        │
        └──────────────────┬───────────────────┘
                           │
S602                       ▼
        ┌──────────────────────────────────────┐
        │         SERVER GENERATES I′           │
        │     TO WHICH MAINTENANCE              │
        │     INFORMATION IS ADDED              │
        └──────────────────┬───────────────────┘
                           │
S603                       ▼
        ┌──────────────────────────────────────┐
        │   TRANSMIT I′ AND H_MK(I′‖S‖MK)       │
        │      TO MAINTENANCE PERSON            │
        └──────────────────┬───────────────────┘
                           │
S604                       ▼
        ┌──────────────────────────────────────┐
        │         MAINTENANCE PERSON            │
        │       PERFORMS REPRINTING            │
        └──────────────────┬───────────────────┘
                           │
                           ▼
                    ┌──────────────┐
                    │     end      │
                    └──────────────┘
```

**S601** MAINTENANCE PERSON TRANSMITS I AND S TO SERVER

**S602** SERVER GENERATES I′ TO WHICH MAINTENANCE INFORMATION IS ADDED

**S603** TRANSMIT I′ AND $H_{MK}(I'\|S\|MK)$ TO MAINTENANCE PERSON

**S604** MAINTENANCE PERSON PERFORMS REPRINTING

FIG. 6

PRINTED INFORMATION

PRODUCT-RELATED
INFORMATION

SECURITY CODE

| I' | S | $Enc_K(MK)$ | $H_{MK}(I'\|S\|MK)$ |
|----|---|-------------|---------------------|

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009524998 A

- JP 2009533741 A

**Non-patent literature cited in the description**

- Strong authentication with physical unclonable functions. **TUYL P et al.** SECURITY, PRIVACY, AND TRUST IN MODERN DATA MANAGEMENT :WITH 13 TABLES. SPRINGER, 01 January 2007, 133-148
- Anti-counterfeiting, key distribution, and key storage in an ambient world via physical unclonable functions. **JORGE GUAJARDO et al.** INFORMATION SYSTEMS FRONTIERS; A JOURNAL OF RESEARCH AND INNOVATION. KLUWER ACADEMIC PUBLISHERS, 23 October 2008, vol. 11, 19-41

- RFID-Tags for Anti-counterfeiting. **PIM TUYLS et al.** TOPICS IN CRYPTOLOGY - CT- RSA 2006 : THE CRYPTOGRAPHERS' TRACK AT THE RSA CONFERENCE 2006, SAN JOSE, CA, USA, FEBRUARY 13-17, 2006 ; PROCEEDINGS; [LECTURE NOTES IN COMPUTER SCIENCE]. SPRINGER, 01 January 2005, 115-131